(19) Europäisches Patentamt
European Patent Office
Office européen des brevets

(11) Veröffentlichungsnummer: **0 259 836**
**A2**

# (12) EUROPÄISCHE PATENTANMELDUNG

(21) Anmeldenummer: **87113117.3**

(22) Anmeldetag: **08.09.87**

(51) Int. Cl.4: **A23J 7/00**, C07F 9/10

(30) Priorität: **09.09.86 DE 3630676**

(43) Veröffentlichungstag der Anmeldung: **16.03.88 Patentblatt 88/11**

(84) Benannte Vertragsstaaten: **BE CH DE FR GB LI NL**

(71) Anmelder: **Peter, Siegfried, Prof. Dr.,**
**Egerlandstrasse 3**
**D-8520 Erlangen(DE)**

(72) Erfinder: **Peter, Siegfried, Prof. Dr.**
**Egerlandstrasse 3**
**D-8520 Erlangen(DE)**
Erfinder: **Weidner, Eckhard, Dr.**
**Schanzenstrasse 38**
**D-8500 Nürnberg(DE)**
Erfinder: **Kirchner-Reinhardt, Robert**
**Geschwister-Scholl-Strasse 8**
**D-8520 Erlangen(DE)**

(74) Vertreter: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-8000 München 40(DE)**

## (54) Verfahren zur Gewinnung von Phosphatidylcholin aus einem Gemisch von Phosphatiden.

(57) Die Erfindung betrifft ein Verfahren zur Gewinnung von Phosphatidylcholin aus einem Gemisch von Phosphatiden, bei dem man das Gemisch aus Phosphatiden in Mono-oder Di-Glyceriden von Fettsäuren oder einem Gemisch derartiger Glyceride, deren Schmelzpunkte vorzugsweise unterhalb 30°C liegen, wobei das bzw. die Glycerid(e) noch Triglyceride und/oder geringe Mengen an freien Fettsäuren enthalten können, als Schleppmittel, löst, anschließend die Lösung im Gegenstrom mit einem Extraktionsmittel, das aus einer überkritischen Komponente und einem weiteren Schleppmittel besteht, bei Bedingungen, bei denen das Extraktionsmittel überkritisch ist, unter partieller Rückführung des Extraktes extrahiert und aus dem Raffinat insbesondere durch anschließende Extraktion der Glyceride das Phosphatidylcholin rein oder in angereicherter Form abtrennt.

EP 0 259 836 A2

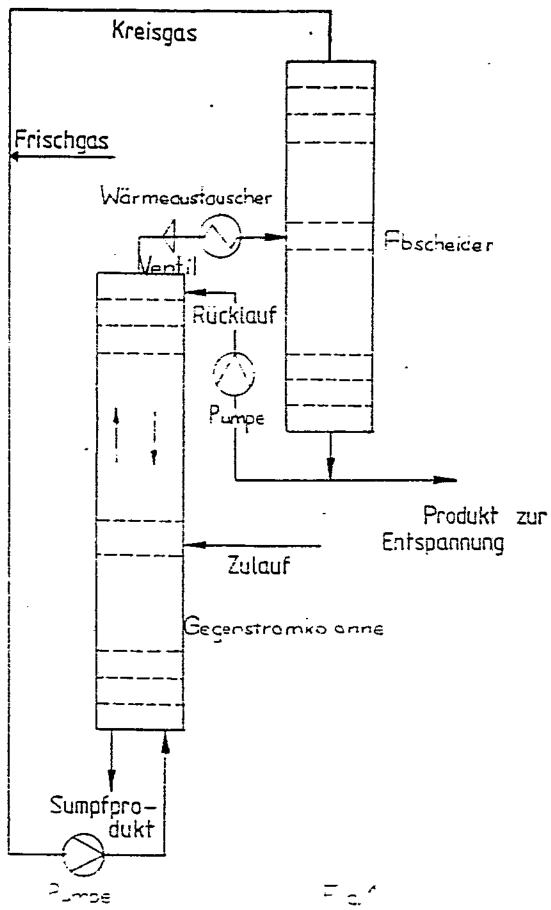
Kreisgas
Frischgas
Wärmeaustauscher
Ventil
Abscheider
Rücklauf
Pumpe
Produkt zur
Entspannung
Zulauf
Gegenstromkolonne
Sumpfprodukt
Pumpe

## Verfahren zur Gewinnung von Phosphatidylcholin aus einem Gemisch von Phosphatiden

Die Erfindung betrifft ein Verfahren zur Gewinnung von Phosphatidylcholin aus einem Gemisch von Phosphatiden.

Phosphatide kommen als Begleitstoff in allen natürlichen Fetten vor. In den vegetabilischen Ölen aus Ölsaaten, wie z.B. Sojabohnen, Sonnenblumensamen, Maiskernen, Raps, Hanf und Leinsamen sind Phosphatide zu etwa 0,2 bis 0,6 Gew.% enthalten.

Diese Materialien sind also auch als erfindungsgemäße Quelle von Phosphatidgemischen gut geeignet.

Der größte Teil der im Handel befindlichen Phosphatide werden gegenwärtig bei der Verarbeitung des Sojaöls gewonnen. Ferner werden Hühnereier, Hefelipide und Bakterienbiomasse zur Gewinnung von Phosphatiden herangezogen. Im Handel wird das Gemisch der Phosphatide als "Lecithin" bezeichnet.

Nach Abtrennung der Begleitstoffe, vor allem der Fette, werden die Phosphatide als gelbliches meist etwas klebriges Pulver erhalten. Dieses als "Reinlecithin" gehandelte Produkt besteht aus einem Gemisch verschiedener Phosphatide.

Die Phosphatide zeichnen sich dadurch aus, daß in ihnen ein fettähnlicher Molekülteil über einen Phosphorsäurerest esterartig mit der Hydroxylgruppe der Aminoalkohole Cholin, Ethanolamin, Serin usw. oder Inosit verbunden ist.In Abhängigkeit von der Natur des fettartigen Molekülanteils kann man die Phosphatide in

a) Esterphosphatide,

b) Acetalphosphatide oder Phasmogene und

c) die sich vom Sphingosin ableitenden Phosphatide unterteilen.

Die Esterphosphatide sind echte Glyceride, in denen jeweils einer der Fettsäurereste durch den Cholinphosphorsäurerest oder den Ethylaminphosphorsäurerest ersetzt ist. Ihre Zahl ist sehr groß, da nicht nur die Fettsäurereste variieren können sondern auch die Alkoholkomponente und die Stellung der Phosphorsäure. Man unterscheidet innerhalb der Gruppe der Esterphosphatide allgemein zwischen den in Alkohol leicht löslichen eigentlichen Lecithinen, die sich vom Cholin ableiten, und den in Alkohol - schwerlöslichen Kephalinen, die sich vom ß-Aminoethanol ableiten.

Ersetzt man in den Esterphosphatiden die beiden Fettsäurereste durch den 1,2 oder 1,3-cycloacetalartig gebundenen Rest eines Fettaldehyds, so kommt man zu den Acetophosphatiden oder Phasmogenen, die ebenfalls in Lecithine und Kephaline unterteilt werden können.

Wird in den Esterphosphatiden die Glycerinkomponente durch den Aminoalkohol Sphingosin ersetzt, so gelangt man zu den Sphingophosphatiden, die zu etwa 10 bis 15 % in den Gesamtphosphatiden enthalten sind.

Die Zusammensetzung einiger Phosphatide aus Ölsaaten, wie z.B. Soja, im Vergleich zu Eilecithin ist in der nachstehenden Tabelle aufgeführt.

| Phospholipid | Soja Gew.-% | Ei Gew.-% |
|---|---|---|
| Phosphatidylcholin | 17-26 | 78-84 |
| Phosphatidylethanolamin | 15-21 | 11-16 |
| Phosphatidylinosit | 14-17 | 0-1 |
| Phosphatidylserin | 2-3,5 | -- |
| Phytoglykolipide | 7-12 | -- |
| Andere Phospholipide | 9-17 | 7-12 |

Das Eilecithin zeichnet sich gegenüber den pflanzlichen Lecithinen durch seinen hohen Gehalt an Phosphatidylcholin aus. Deswegen ist es für die Verwendung in Medizin und Pharmazie von besonderem Interesse. Da das Ei bzw. das Eigelb ein teures Ausgangsprodukt ist, ist das aus dem Ei gewonnene Lecithin entsprechend kostspielig. In der Medizin und Pharmazie hat das an Phosphatidylcholin reiche Lecithin als Therapeutikum bei Fettstoffwechselstörungen, als Diätetikum, als Stärkungsmittel und Gehirnnahrung, zur Senkung von Blutcholesterol-und Lipidspiegel usw. an Bedeutung gewonnen.

Die vorliegende Erfindung befaßt sich mit der Aufgabe, aus den in großer Menge und zu relativ günstigen Preisen zur Verfügung stehenden Lecithinen aus Ölsaaten das Phosphatidylcholin abzutrennen bzw. ein an Phosphatidylcholin angereichertes Lecithin zu gewinnen.

Versuche von Purdun (Fette, Seifen, Anstrichmittel, 86.Jahrg. (1984), S.55-62) ergaben, daß sich durch eine flüssig-flüssig Extraktion mit Alkoholen eine Anreicherung an Phosphatidylcholin erreichen läßt. Die besten Ergebnisse wurden dabei mit reinem Methanol erhalten. Durch einen Wasserzusatz von ca. 15 Gew.-% konnte die Selektivität erheblich gesteigert werden; allerdings unter Abnahme des Wirkungsgrades. Durch Gegenstromführung läßt sich ein auf etwa 45 Gew.-% Phosphatidylcholin angereichertes Produkt erzeugen. Das genügt für die Verwendung im Lebensmittelsektor. Für die Verwendung in Medizin und Pharmazie sind jedoch Produkte mit einem Gehalt von 50 bis 100 Gew.-% an Phosphatidylcholin notwendig.

Nach den Verfahren, die in DE-A-1 617 679; 1 617 680 und 2 718 797 beschrieben wind, werden die ölhaltigen Rohphosphatide in Essigester oder einem dichlorierten Kohlenwasserstoff mit 1-2 Kohlenstoffatomen bzw. Mischungen dieser Lösungsmittel gelöst. Dabei kann das Lösemittel bis zu 6 Vol.% Alkohol enthalten. Die Lösung wird dann mit mindestens der fünffachen Menge an Aluminiumoxid, bezogen auf den Gehalt an Rohphosphatid unter Rühren behandelt. Die Lösung der Rohphosphatide kann auch direkt auf eine Aluminiumsäule gegeben werden.

Eine weitere Möglichkeit zur Lecithinfraktionierung ist die Säulen-oder Verteilungschromatographie mit Silicagel. Bei Verwendung von Toluol-Methanol-Gemischen als Lösungsmittel kann durch Verteilungschromatographie 97 bis 99 prozentiges Phosphatidylcholin gewonnen werden.

Nach der DE-A-1 047 597 extrahiert man den acetonunlöslichen Anteil des Rohlecithins mit Ethanol und läßt den Extrakt, der 2 bis 3 Gew.-% Phosphatide enthält, durch eine Säule aus $Al_2O_3$ und MgO perkolieren. Nach dem Eindampfen des Perkolats bleibt ein Gemisch aus Phosphatidylcholinen zurück.

Die genannten Verfahren zur Gewinnung von hochprozentigen Phosphatidylcholinen sind jedoch sehr kostenintensiv, weil als stationäre Phase nur hochaktive Stoffe verwendet werden können und diskontinuierlich gearbeitet werden muß. Sojalecithin mit einem Phosphatidylcholingehalt von 45 % ist um den Faktor 4 bis 5 teurer als entöltes Lecithin. Sojalecithin mit einem Gehalt an PHosphatidylcholin von 70 % ist sogar um den Faktor 25 teurer. Es besteht demnach ein großes Interesse an einem Verfahren, das die Herstellung von an Phosphatidylcholin reichen Lecithinen zu wirtschaftlich günstigen Bedingungen ermöglicht.

Erfindungsgemäß soll also ein technisch vorteilhaftes Verfahren zur Gewinnung von Phosphatidylcholin aus leicht zugänglichen und in den gewünschten Mengen verfügbaren Ausgangsmaterialien geschaffen werden.

Gegenstand der Erfindung ist ein Verfahren zur Gewinnung von Phosphatidylcholin aus einem Gemisch von Phosphatiden, das dadurch gekennzeichnet ist, daß man das Gemisch aus Phosphatiden in Mono-oder Di-Glyceriden von Fettsäuren oder einem Gemisch derartiger Glyceride, deren Schmelzpunkte vorzugsweise unterhalb 30°C liegen, wobei das bzw. die Glycerid(e) noch Triglyceride und/oder geringe Mengen an freien Fettsäuren enthalten können, als Schleppmittel, löst, anschließend die Lösung im Gegenstrom mit einem Extraktionsmittel, das aus einer überkritischen Komponente und einem weiteren Schleppmittel besteht, bei Bedingungen, bei denen das Extraktionsmittel überkritisch ist, unter partieller Rückführung des Extraktes extrahiert und aus dem Raffinat insbesondere durch anschließende Extraktion der Glyceride das Phosphatidylcholin rein oder in angereicherter Form abtrennt.

In einer speziellen Ausführungsform der Erfindung kann man das Gemisch aus Phosphatiden mit einem oder mehreren der Glyceride in der Weise mischen, daß eine 20 bis 50%-ige, vorzugsweise 25 bis 40%-ige Lösung des Gemisches aus Phosphatiden entsteht und diese Mischung mit dem überkritischen Extraktionsmittel extrahiert.

Dabei können als Glyceride solche mit folgenden Strukturformeln bevorzugt verwendet werden:

$CH_2OOCR_1$
|
$CHOH$
|
$CH_2OH$

$CH_2OOCR_1$
|
$CHOH$
|
$CH_2OOCR_2$

$CH_2OH$
|
$CHOOCR_1$
|
$CH_2OH$

und/oder

$CH_2OOCR_1$
|
$CHOOCR_2$
|
$CH_2OH$

worin $R_1$ und $R_2$ Alkylreste oder Reste ungesättigter Kohlenwasserstoffe, die ein oder mehrere Kohlenstoffdoppelbindungen enthalten können, mit 1 bis 30 Kohlenstoffatomen, vorzugsweise 3 bis 21 Kohlenstoffatomen, bedeuten.

Hierbei können als Glyceride solche der Ölsäure, Palmitoleinsäure, Myristoleinsäure, Lauroleinsäure, Caproleinsäure oder ihre Gemische bevorzugt verwendet werden.

Besonders bevorzugt können als Glyceride Mono-, Di-und, in geringer Menge, Triglyceride der Ölsäure, die noch geringe Mengen an freier Ölsäure enthalten, verwendet werden.

Nach dem Verfahren dieser Erfindung erfolgt also die Extraktion zur Trennung bzw. Anreicherung des Phosphatidylcholins mit Hilfe eines überkritischen Extraktionsmittels, welches aus Schleppmittel besteht. Unter dem Ausdruck "überkritische Komponente" ist eine Komponente zu verstehen, deren kritische Temperatur niedriger als die Arbeitstemperatur ist. Bei dem leichtflüchtigen Schleppmittel ist die kritische Temperatur höher als die Arbeitstemperatur. Der Arbeitsdruck muß höher als die Arbeitstemperatur. Der Arbeitsdruck muß höher als der kritische Druck des Gemisches aus leicht flüchtigem Schleppmittel und überkritischer Komponente bei der Arbeitstemperatur bleiben. Unter diesen Bedingungen ist das Gemisch, unabhängig von der Zusammensetzung, immer einphasig. Es gibt kein Unterscheidungskriterium zwischen gasförmigem und flüssigem Zustand. Die Extraktionsbedingungen werden dabei vorteilhaft so gewählt, daß das quasiternäre System Lecithin/Schleppmittel/überkritische Komponente eine niedrigviskose Lösung bildet. Die Extraktion erfolgt z.B. bei Drücken im Bereich von 70 bis 200 bar, insbesondere bei Drücken zwischen 70 und 150 bar, vorzugsweise bei 100 bis 150 bar. Die Gegenstromextraktion kann z.B. bei Temperaturen im Bereich von 30 bis 80°C, vorzugsweise 40 bis 60°C betrieben werden. Als überkritische Komponente des Extraktionsmittels können Kohlendioxid, $N_2O$, Ethan, Ethylen und $CF_3Cl$ verwendet werden. Die überkritische Komponente kann in einem Mengenverhältnis von 20-80% eingesetzt werden. Als leichtflüchtige Schleppmittel können Propan, Propen, Butan, $CHF_3$ und $CHF_2Cl$ verwendet werden. Als - schwerflüchtige Schleppmittel sind z.B. Mono-oder Diglyceride von Fettsäuren oder ein Gemisch derartiger Glyceride geeignet, wobei das bzw. die Glycerid(e) noch Triglyceride und/oder geringe Mengen an freien Fettsäuren enthalten können.

Eine besonders einfache Realisierung des Verfahrens dieser Erfindung besteht darin, das Phosphatid-Gemisch in einem Monoglycerid oder in einem Diglycerid oder auch in einem Glycerid-Gemisch zu lösen und die Lösung mit einem erfindungsgemäßen Extraktionsmittel aus einer überkritischen Komponente und einem leichtflüchtigen Schleppmittel mit einer Siedetemperatur kleiner als 100°C zu extrahieren.

Je höher der Gehalt des Glyceridgemisches an Monoglyceriden ist, desto höher ist der Trennfaktor zwischen Phosphatidylcholin und Phosphatidylethanolamin. Das Lösungsmittel für die Phosphatide bedingt also den Trennfaktor. Die Trennung erfolgt im Gegenstromverfahren mit teilweiser Rückführung des Produktes.

Die vorliegende Erfindung wird durch beiliegende Figur, die eine spezielle Ausführungsform der Erfindung zeigt, erläutert. Unter Zulauf ist die Lösung von Lecithin in einem oder mehreren der in Anspruch 1 genannten Glyceride. Diese Lösung wird im mittleren Teil einer Gegenstromkolonne zugeführt. Die überkritische Komponente, beispielsweise $CO_2$, das als weiteres Schleppmittel Propan enthält, durchströmt die Kolonne von unten nach oben. Dabei löst sich ein Teil des Glyceridgemisches und der Phosphatide in der überkritischen Phase (im folgenden dichte Gasphase genannt) auf. Von den Phosphatiden bleibt das Phosphatidylcholin bevorzugt in der flüssigen Phase, die nach unten strömt, während sich die anderen Phosphatide in der dichten Gasphase anreichern. Teilweise werden also die Glyceride über den Kopf der Trennkolonne ausgetragen. Gleichzeitig werden insbesondere Phosphatidylethanolamin, Phosphatidylinosit und Phosphatidylserin mit dem Kopfprodukt abgeführt. Es passiert ein Ventil, wobei eine Teilentspannung

stattfindet und anschließend einen Wärmeaustauscher zum Ausgleich der Abkühlung durch die Entspannung. Schließlich gelangt es in den Abscheider. Darin wird durch Teilentspannung und gegebenenfalls Temperaturerhöhung eine Phasentrennung hervorgerufen und die gelösten Mono-und Diglyceride und Phosphatide abgetrennt. Diese Regenerierung des Extraktionsmittels erfolgt in dem Abscheider durch Teilentspannung um 20 bis 100 bar, vorzugsweise um 40 bis 60 bar, bei der Temperatur der Extraktion. Sie kann auch durch gleichzeitige Teilentspannung und Temperaturerhöhung vorzugsweise auf bis zu 80°C erfolgen. Das regenerierte Extraktionsmittel wird in die Gegenstromkolonne zurückgeführt (Kreisgas), nachdem gegebenenfalls verloren gegangene Komponenten ergänzt und es nach Passieren einer Pumpe wieder auf den Arbeitsdruck gebracht worden ist. Ein Teil des am Boden des Abscheiders ausströmenden Produktes wird, nach Passieren einer Pumpe, dem Kopf der Trennkolonne als Rücklauf zugeführt, um Verluste an Phosphatidylcholin möglichst gering zu halten.

Gegebenenfalls kann ein Teil der im Abscheider anfallenden Produkte, der nicht zu dem Kopf der Trennkolonne zurückgeführt wird, z.B. durch überkritische Extraktion getrennt werden. Die dabei erhaltenen Glyceride können wiederum als Lösungsmittel für weitere zu trennende Phosphatidgemische dienen.

Im Sumpf der Trennkolonne fällt eine Lösung von Phosphatidylcholin oder von Phosphatiden, in denen Phosphatidylcholin zumindest stark angereichert ist, im Glyceridgemisch an, wobei auch noch eine geringe Menge an Propan anwesend ist. Bei der Entnahme aus der Trennkolonne kommt es zur Entspannung, wodurch der Propananteil verdampft.

Das Glyceridgemisch kann dann von dem Phosphatidylcholin bzw. von den Phosphatiden nach denselben Methoden getrennt werden, die bei der Aufbereitung von Rohlecithin üblich sind. Im so erhaltenen Produkt etwa noch vorhandenes Phosphatidylinosit kann durch Auflösen der Cholinlecithine in Methanol abgetrennt werden, da das Phosphatidylinosit in Methanol unlöslich ist.

Die nachfolgenden Beispiele sollen das Verfahren dieser Erfindung weiter erläutern. Die angegebenen Prozentwerte beziehen sich auf das Gewicht.

Beispiel 1:

Reinlecithin, das 21 Gew.% Phosphatidylcholin, 22 Gew.% Phosphatidylethanolamin, 18 Gew.% Phosphatidylinosit, 8 Gew.% Phosphatidylserin und 7,5 Gew.% andere Phosphatide enthielt, wurde in einem Glyceridgemisch aus 40 Gew.% Ölsäuremonoglycerid, 39 Gew.% Ölsäurediglycerid, 17 Gew.% Ölsäuretriglycerid, 3,5 Gew.% Ölsäure und 0,5 Gew.% Glycerin gelöst. Die Lecithinkonzentration betrug 45 Gew.%. Die Lösung wurde dem Mittelteil einer Gegenstromkolonne zugepumpt. Die Kolonne war mit Sulzerpackungen versehen und hatte eine Trennwirksamkeit von etwa zwei theoretischen Stufen im Abtreiberteil. Die Kolonne wurde von einem Gemisch aus $CO_2$ und Propan im Verhältnis 1:4 von unten nach oben durchströmt. Der Druck in der Kolonne betrug 120 bar und die Temperatur 55 °C. Die Beladung des Extraktionsmittels aus $CO_2$ und Propan mit Lecithin und Glyceriden betrug etwa 5 Gew.%. Bei einem Verteilungsfaktor für Phosphatidylcholin von 0,6 reicherte sich dasselbe in der die Trennkolonne nach unten durchströmenden Flüssigphase an. Das den Kopf der Kolonne verlassende Extraktionsmittel wurde in den Abscheider überführt. Bei einem Druck von 80 bar und einer Temperatur von 55 °C wurden die gelösten Phosphatide quantitativ abgeschieden. Ebenso fiel ein Teil der gelösten Ölsäureglyceride aus. Das Extraktionsmittel mit den in Lösung verbliebenen Ölsäureglyceriden wurde in den Sumpf der Trennkolonne rezirkuliert. Auf dem Weg nach unten reicherte sich Phosphatidylcholin in der flüssigen Phase an. Als Sumpfprodukt wurde eine Lösung von Phosphatidylcholin im Gemisch aus Ölsäureglyceriden abgezogen. Die Konzentration an Phosphatidylcholin bezogen auf die Gesamtphosphatide betrug 42 %. Die Ölsäureglyceride können von den Phosphatiden im Sumpfprodukt nach einem der bei der Gewinnung von Reinlecithin aus Rohlecithin üblichen Verfahren getrennt werden.

Beispiel 2

Reinlecithin, das 21 % Phosphatidylcholin, 20 % Phosphatidylethanolamin, 21,8 % Phosphatidylinosit, 17,3 % Phosphatidylserin und 1,7 % Lysophosphatidylcholin enthielt, wurde in einem Glyceridgemisch aus 53 Gew.% Ölsäuremonoglycerid, 31 Gew.% Ölsäurediglycerid, 13 Gew.% Ölsäuretriglycerid und 3 Gew.% freie Ölsäure gelöst. Die Lecithinkonzentration betrug 30 Gew.%. Die Lösung wurde einer Gegenstromkolonne etwa in der Mitte kontinuierlich zugepumpt. Die Kolonne, die mit Sulzerpackungen versehen war, verfügte über etwa zwei theoretische Stufen im Abtreiberteil. Die Kolonne wurde von einem Gemisch aus $CO_2$ und Propan im Verhältnis 1:4 von unten nach oben durchströmt. Der Druck in der Kolonne betrug 100

bar und die Temperatur 45 °C. Die Beladung des Extraktionsmittel aus $CO_2$ und Propan mit Lecithin und Ölsäureglyceriden betrug etwa 7 Gew.%. Bei einem Verteilungsfaktor von 0,8 für Phosphatidylcholin reicherte sich dasselbe in der die Trennkolonne nach unten durchströmenden Flüssigphase an. Das den Kopf der Trennkolonne verlassende beladene Extraktionsmittel wurde in den Abscheider überführt. Dort wurden bei einem Druck von 70 bar und 55 °C die gelösten Phosphatide quantitativ abgeschieden. Ebenso fiel ein Teil der gelösten Ölsäureglyceride aus. Das Extraktionsmittel mit den in Lösung verbliebenen Ölsäureglyceriden wurde in den Sumpf der Trennkolonne rezirkuliert. Ein Teil des im Abscheider angefallenen Produktes wurde auf den Kopf der Trennkolonne als Rücklauf zurückgeführt. Auf dem Weg nach unten reicherte sich Phosphatidylcholin in der flüssigen Phase an. Als Sumpfprodukt wurde eine Lösung von Phosphatiden, in der Phosphatidylcholin bis auf 33 % bezogen auf Gesamtphosphatide angereichert war, abgezogen. Aus dem Sumpfprodukt können die Phosphatide nach einem bei der Gewinnung von Reinlecithin aus Rohlecithin üblichen Verfahren von den Ölsäureglyceriden getrennt werden. Das Lösemittelverhältnis bei der Gegenstromextraktion betrug ca. 10 %.

Beispiel 3:

Reinlecithin, das 21 % Phosphatidylcholin, 20 % Phosphatidylethanolamin, 21,8 % Phosphatidylinosit, 17,3 % Phosphatidylserin und 1,7 % Lysophosphatidylcholin enthielt, wurde in einem Glycerid gemisch aus 90 % Ölsäuremonoglycerid und 10 % Ölsäurediglycerid gelöst. Die Konzentration an Lecithin betrug 25 %. Die Lösung wurde einer Gegenstromkolonne etwa in der Mitte kontinuierlich zugeführt. Die Kolonne war mit Sulzerpackungen versehen. Sie verfügte über etwa drei theoretische Stufen im Abtreiberteil. Die Kolonne wurde von einem Gemisch aus $CO_2$ und Propan im Verhältnis 1:3,5 von unten nach oben durchströmt. Der Druck in der Kolonne betrug 110 bar und die Temperatur 50°C. Die Beladung des Extraktionsmittels aus $CO_2$ und Propan mit Lecithin und Ölsäureglyceriden war etwa 5 %. Bei einem Verteilungsfaktor von 0,7 für Phosphatidylcholin reicherte sich dasselbe in der Flüssigphase an, die die Kolonne von oben nach unten durchströmte. Das den Kopf der Trennkolonne verlassende beladene Extraktionsmittel wurde in einen Abscheider übergeführt. Dort wurden bei einem Druck von 70 bar und 55°C die gelösten Phosphatide quantitativ abgeschieden. Ebenso fiel der größere Teil der gelösten Ölsäureglyceride aus. Das Extraktionsmittel mit den in Lösung verbliebenen Ölsäureglyceriden wurde in den Sumpf der Kolonne rezirkuliert. Ein Teil des im Abscheider ausgefallenen Produktes wurde auf den Kopf der Trennkolonne zurückgeführt. Auf dem Weg nach unten reicherte sich Phosphatidylcholin in der flüssigen Phase an. Am Sumpf wurde ein Produkt abgezogen, in welchem der Gehalt an Phosphatidylcholin auf 44% bezogen auf den Gesamtgehalt an Phosphatiden angereichert war. Etwa im Sumpfprodukt noch vorhandene Ölsäureglyceride können aus dem Gemisch nach einem der bei der Gewinnung von Reinlecithin aus Rohlecithin üblichen Verfahren entfernt werden. Das Lösemittelverhältnis betrug bei dem Versuch etwa 12 %.

Beispiel 4

Reinlecithin, das 21 % Phosphatidylcholin, 20 % Phosphatidylethanolamin, 21,8 % Phosphatidylinosit, 17,3 % Phosphatidylserin und 1,7 % Lysophosphatidylcholin enthielt, wurde in einem Glyceridgemisch aus 55 % Palmitoleinmonoglycerid, 40 % Palmitoleindiglycerid und 5 % Palmitoleintriglycerid gelöst. Die Konzentration an Lecithin betrug 24 %. Die Lösung wurde einer Gegenstromkolonne etwa in der Mitte kontinuierlich zugeführt. Die Kolonne war mit Raschig ringen gepackt. Sie verfügte über etwa 5 theoretische Böden im Abtreiberteil. Die Kolonne wurde von einem Gemisch aus $CO_2$ und Propan im Verhältnis 1:3,5 von unten nach oben durchströmt. Der Druck in der Kolonne betrug 110 bar und die Temperatur 50°C. Die Beladung des Extraktionsmittels aus $CO_2$ und Propan mit Schwerflüchtigem (Lecithin und Glyceride) betrug etwa 5 %. Bei einem Verteilungsfaktor von etwa 0,75 für Phosphatidylcholin reicherte sich dasselbe in der Flüssigphase an, die die Kolonne von oben nach unten durchströmte. Das die Kolonne am Kopf verlassende beladene Extraktionsmittel wurde in einen Abscheider überführt. Dort wurden bei einem Druck von 65 bar und 55°C die gelösten Phosphatide quantitativ abgeschieden. Ebenso fiel ein Teil der gelösten Palmitoleinglyceride aus. Das Extraktionsmittel mit den in Lösung verbliebenen Palmitoleinglyceriden wurde in den Sumpf der Kolonne rezirkuliert. Ein Teil des im Abscheider angefallenen Produktes wurde auf den Kopf der Trennkolonne als Rücklauf zurückgeführt. Auf dem Weg nach unten reicherte sich Phosphatidylcholin in der flüssigen Phase an. Am Sumpf der Kolonne wurde ein Produkt abgezogen, in welchem der Gehalt an Phosphatidylcholin auf 55 %, bezogen auf den Gesamtgehalt an Phosphatiden, angereichert war.

Die im Sumpfprodukt noch vorhandenen Palmitoleinsäureglyceride können aus dem Gemisch nach einem der bei der Gewinnung von Reinlecithin aus Rohlecithin üblichen Verfahren, beispielsweise auch durch Extraktion mit einem überkritischen Extraktionsmittel, entfernt werden. Das Lösemittelverhältnis betrug bei dem Versuch etwa 12 %.

Beispiel 5

Rohlecithin, das 35 % Öl und 65 % Lecithin enthält, wird in einer Apparatur, die der schematischen Darstellung in Fig. 1 entsprechend aufgebaut ist, aufbereitet. Der Lecithinanteil hat folgende Zusammensetzung: 21 % Phosphatidylcholin, 20 % Phosphatidylethanolamin, 21,8 % Phosphatidylinosit, 17,3 % Phosphatidylserin, 1,7 % Lysophosphatidylcholin. Dem Rohlecithin werden, auf 100 g bezogen, 85 g Ölsäuremonoglycerid zugesetzt. Das Gemisch aus Rohlecithin und Ölsäuremonoglycerid wird etwa in der Mitte der Trennkolonne zugepumpt. Die Kolonne enthält als Einbauten Sulzerpackungen. Die Wertungsziffer (Zahl der theoretischen Stufen pro m Packungshöhe) des Verstärkerteils beträgt 9, die des Abtriebsteils der Kolonne 12. Die Trennkolonne arbeitet isotherm bei 60°C und einem Druck von 100 bar. Als Extraktionsmittel dient ein Gemisch aus Kohlendioxid als überkritische Komponente und Propan als Schleppmittel im Verhältnis 1:3. Das Extraktionsmittel durchströmt die Kolonne von unten nach oben. Seine Beladung mit Schwerflüchtigem (Lecithin, Sojaöl, Ölsäuremonoglycerid) beträgt unter diesen Bedingungen etwa 10 %. Das die Trennkolonne am Kopf verlassende Extraktionsmittel wird in den Abscheider überführt. Durch Entspannen auf 70 bar und Erhitzen auf 80°C werden die im Extraktionsmittel gelösten Anteile an Schwerflüchtigem als Kopfprodukt abgeschieden. Ein Teilstrom des Kopfproduktes wird in den Kopf der Trennkolonne als Rücklauf zurückgegeben.

Das von den gelösten Stoffen weitgehend befreite Extraktionsmittel verläßt den Abscheider am Kopf und wird mit Hilfe eines Kompressors nach Passieren eines Wärmeaustauschers in den Sumpf der Trennkolonne zurückgeführt. Das dem Sumpf der Trennkolonne entnommene flüssige Produkt wird auf Atmosphärendruck entspannt. Dabei fällt das gewünschte Produkt als feines Pulver an. Es besteht zu etwa 95 % aus Lecithin und etwa 5 % aus Begleitstoffen. Der Lecithinanteil besteht zu etwa 55 % aus Phosphatidylcholin. Die bei der Entspannung von Sumpf-und Kopfprodukt frei werdenden Mengen an Extraktionsmittel werden in den Kreislauf zurückgegeben.

**Ansprüche**

1. Verfahren zur Gewinnung von Phosphatidylcholin aus einem Gemisch von Phosphatiden, dadurch gekennzeichnet, daß man das Gemisch aus Phosphatiden in Mono-oder Di-Glyceriden von Fettsäuren oder einem Gemisch derartiger Glyceride, deren Schmelzpunkte vorzugsweise unterhalb 30°C liegen, wobei das bzw. die Glycerid(e) noch Triglyceride und/oder geringe Mengen an freien Fettsäuren enthalten können, als Schleppmittel, löst, anschließend die Lösung im Gegenstrom mit einem Extraktionsmittel, das aus einer überkritischen Komponente und einem weiteren Schleppmittel besteht, bei Bedingungen, bei denen das Extraktionsmittel überkritisch ist, unter partieller Rückführung des Extraktes extrahiert und aus dem Raffinat insbesondere durch anschließende Extraktion der Glyceride das Phosphatidylcholin rein oder in angereicherter Form abtrennt.

2. Verfahren nach Anspruch 1, dadurch gekennzeichnet, daß man das Gemisch aus Phosphatiden mit einem oder mehreren der Glyceride in der Weise mischt, daß eine 20 bis 50%-ige, vorzugsweise 25 bis 40%-ige Lösung des Gemisches aus Phosphatiden entsteht und diese Mischung mit dem überkritischen Extraktionsmittel extrahiert.

3. Verfahren nach Anspruch 1 und 2, dadurch gekennzeichnet, daß als Glyceride solche mit folgenden Strukturformeln verwendet werden:

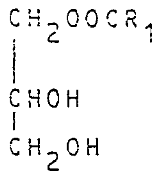

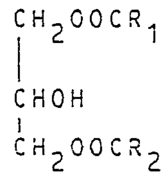

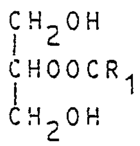

und/oder

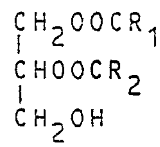

worin $R_1$ und $R_2$ Alkylreste oder Reste ungesättigter Kohlenwasserstoffe, die ein oder mehrere Kohlenstoffdoppelbindungen enthalten können, mit 1 bis 30 Kohlenstoffatomen, vorzugsweise 3 bis 21 Kohlenstoffatomen bedeuten.

4. Verfahren nach Anspruch 1 bis 3, dadurch gekennzeichnet, daß als Glyceride solche der Ölsäure, Palmitoleinsäure, Myristoleinsäure, Lauroleinsäure, Caproleinsäure oder ihre Gemische verwendet werden.

5. Verfahren nach Anspruch 1 bis 4, dadurch gekennzeichnet, daß als Glyceride Mono-, Di-und, in geringer Menge, Triglyceride der Ölsäure, die noch geringe Mengen an freier Ölsäure enthalten, verwendet werden.

6. Verfahren nach Anspruch 1 bis 5, dadurch gekennzeichnet, daß als überkritische Komponente des Extraktionsmittels $CO_2$, Ethan, $N_2O$, Ethylen, $CF_3Cl$ verwendet werden.

7. Verfahren nach Anspruch 1 bis 6, dadurch gekennzeichent, daß als weiteres Schleppmittel Propan, Propen, Butan, $CHF_3$, $CHF_2Cl$ verwendet werden.

8. Verfahren nach Anspruch 1 bis 7, dadurch gekennzeichnet, daß die Gegenstromextraktion bei Temperaturen im Bereich von 30 bis 80°C, vorzugsweise von 40 bis 60°C, betrieben wird.

9. Verfahren nach Anspruch 1 bis 8, dadurch gekennzeichnet, daß die Gegenstromextraktion bei Drücken im Bereich von 70 bis 200 bar, vorzugsweise von 100 bis 150 bar erfolgt.

10. Verfahren nach Anspruch 1 bis 9, dadurch gekennzeichnet, daß eine Regenerierung des Extraktionsmittels in einem Abscheider durch Teilentspannung um 20 bis 100 bar, vorzugsweise um 40 bis 60 bar bei der Temperatur der Extraktion erfolgt.

11. Verfahren nach Anspruch 1 bis 9, dadurch gekennzeichnet, daß eine Regenerierung des Extraktionsmittels in einem Abscheider durch gleichzeitige Teilentspannung und Temperaturerhöhung vorzugsweise auf bis zu 80°C erfolgt.

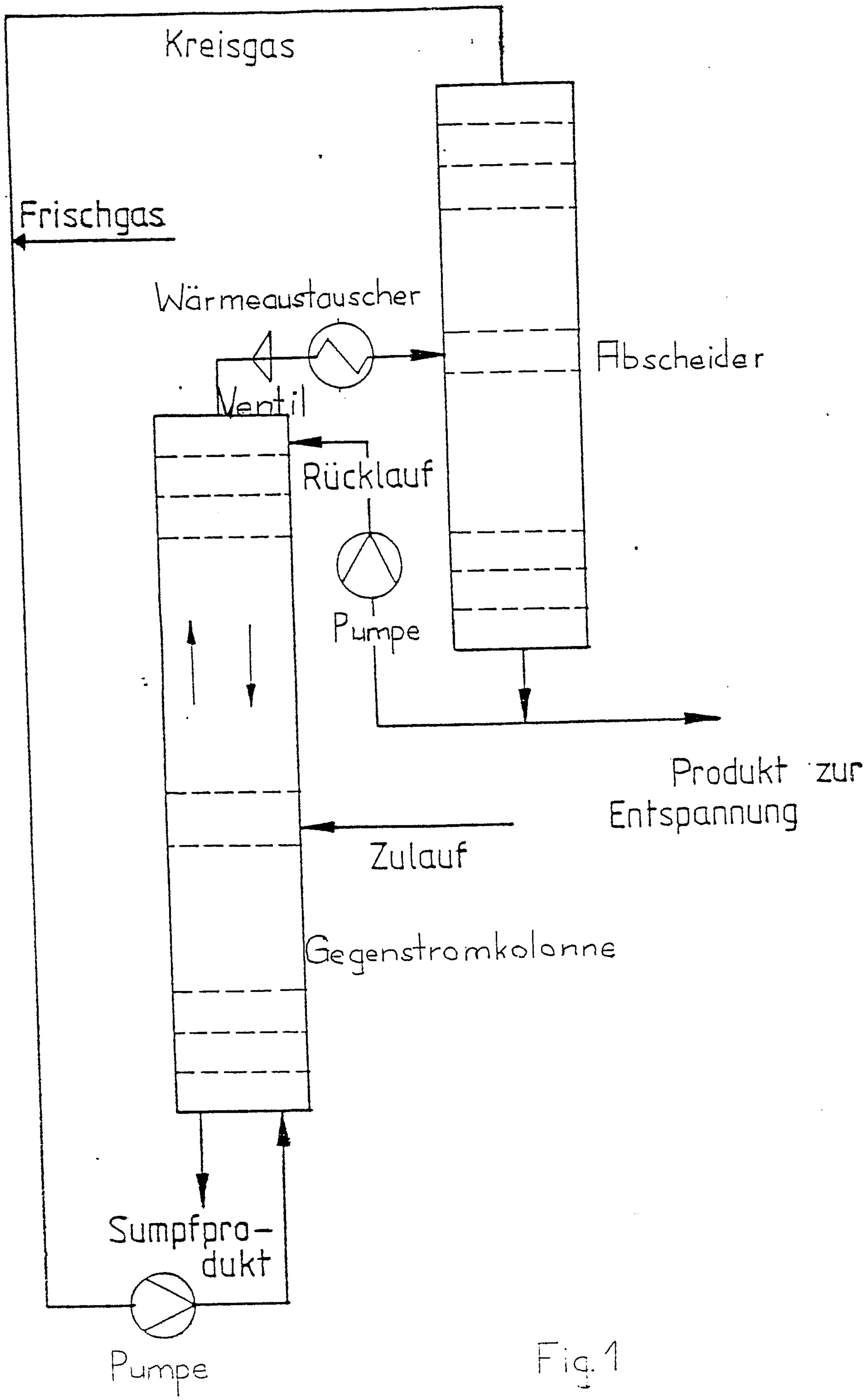
Kreisgas
Frischgas
Wärmeaustauscher
Abscheider
Ventil
Rücklauf
Pumpe
Produkt zur Entspannung
Zulauf
Gegenstromkolonne
Sumpfprodukt
Pumpe

Fig. 1